# EUROPÄISCHE PATENTANMELDUNG

(11) **EP 1 619 402 A1**
(43) Veröffentlichungstag der Anmeldung: **25.01.2006**
(21) Anmeldenummer: 04017536.6
(22) Anmeldetag: 23.07.2004
(51) Int. Cl.: F16D 1/027

(54) **Kraftfahrzeug-Stellantrieb mit einem Axialspielausgleichselement zwischen der Getriebewelle und der Motorwelle**

(71) Anmelder: SIEMENS AKTIENGESELLSCHAFT, 80333 München (DE)
(72) Erfinder: Viernekes, Gerald, 97437 Hassfurt (DE)

(57) **Zusammenfassung**

Die Erfindung betrifft einen Kraftfahrzeug-Stellantrieb, der eine eine Getriebewelle (2) aufweisende Getriebeeinheit und eine eine Motorwelle (4) aufweisende Motoreinheit enthält. Die Getriebewelle (2) und die Motorwelle (4) verlaufen in Axialrichtung in einer Flucht. Zwischen der Getriebewelle (2) und der Motorwelle (4) ist ein Axialspielausgleichselement (6) vorgesehen, bei welchem es sich um eine nachtäglich härtende plastische Masse handelt.

## Beschreibung

Die Erfindung betrifft einen Kraftfahrzeug-Stellantrieb mit einem Axialspielausgleichselement zwischen der Getriebewelle und der Motorwelle.

Kraftfahrzeug-Stellantriebe, beispielsweise Fensterheber-Antriebe oder Antriebe zur Betätigung des Schiebedaches, sind bereits bekannt. Sie weisen eine Motoreinheit und eine Getriebeeinheit auf. Die Getriebeeinheit weist ein Schneckenrad und eine als Schneckenwelle realisierte Getriebewelle auf. Die Motoreinheit besteht aus einem in einem Motorgehäuse angeordneten Elektromotor, der mit einer Motorwelle und einem auf dieser befestigten, eine Vielzahl von Lamellen enthaltenden Läuferpaket versehen ist. Die Getriebewelle bekannter Kraftfahrzeug-Stellantriebe ist direkt auf die Motorwelle aufgefräst. Zum Ausgleich von fertigungsbedingten Toleranzen sind Axialspielausgleichselemente vorgesehen, die an dem von der Motorwelle abgewandten Endbereich der Getriebewelle zwischen der Getriebewelle und dem Getriebegehäuse und/oder an dem von der Getriebewelle abgewandten Endbereich der Motorwelle zwischen der Motorwelle und dem Motorgehäuse positioniert sind. Mittels derartiger Axialspielausgleichselemente kann jedoch aus fertigungstechnischen Gründen kein vollständiger Ausgleich der Fertigungstoleranzen erfolgen. Es ist stets ein Restspiel von bis zu 0,2 mm gegeben.

Aus der EP 1 270 368 A2 ist ein elektrisches System bekannt, welches einen Elektromotor mit einer Motorwelle und ein Getriebe mit einer Getriebewelle aufweist. Im Übergangsbereich zwischen der Motorwelle und der Getriebewelle ist ein Axialspielausgleichselement vorgesehen, bei dem es sich um eine Feder handelt. Ferner ist im Übergangsbereich zwischen der Motorwelle und der Getriebewelle ein Verbindungselement (joint) vorgesehen, das die Motorwelle zum Zwecke einer Weitergabe des Drehmoments mit der Getriebewelle koppelt.

Die Aufgabe der Erfindung besteht darin, einen Kraftfahrzeug-Stellantrieb anzugeben, bei welchem die Weitergabe des Drehmoments von der Motorwelle an die Getriebewelle verbessert ist.

Diese Aufgabe wird durch einen Kraftfahrzeug-Stellantrieb mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass durch die Verwendung einer nachträglich härtenden plastischen Masse als Axialspielausgleichselement die Kopplung zwischen der Motorwelle und der Getriebewelle verbessert ist, sobald die plastische Masse ausgehärtet ist. Dadurch ist im Vergleich zum Stand der Technik die Weitergabe des Drehmoments von der Motorwelle auf die Getriebewelle verbessert.

Gemäß einer vorteilhaften Ausführung ist die Getriebewelle in ihrem der Motorwelle zugewandten Endbereich mit einer Öffnung versehen, in welche ein Endbereich der Motorwelle hineinragt. Dies hat den Vorteil, dass der Bereich, in welchen beim Zusammenbau des Stellantriebs plastische Masse einzubringen ist, begrenzt ist, so dass sichergestellt ist, dass ein Austreten von plastischer Masse in andere Teile des Stellantriebs nicht stattfindet.

Ein Kraftfahrzeug-Stellantrieb mit den vorgenannten Merkmalen kann in weiterer vorteilhafter Ausführung der Dimensionierung so ausgeführt werden, dass die im Endbereich der Getriebewelle vorgesehenen Öffnung in Radialrichtung größer ist als der Durchmesser des Abschnittes der Motorwelle der in die Öffnung hineinragt. Dies hat den Vorteil, dass durch die beanspruchte Dimensionierung der Öffnung sichergestellt ist, dass einerseits plastische Masse in den Übergangsbereich zwischen der Motorwelle und der Getriebewelle in einfacher Weise eingebracht werden kann und andererseits plastische Masse auch in den Bereich zwischen dem Außenumfang der Motorwelle und dem Innenumfang der Getriebewelle eingebracht werden kann, was nach erfolgter Aushärtung der plastischen Masse die Kopplung zwischen der Motorwelle und der Getriebewelle weiter verbessert.

Bei einer weiteren vorteilhaften Ausführung des Kraftfahrzeug-Stellantriebs ist auf dem Umfang des in die Getriebewelle hineinragenden Bereichs der Motorwelle mindestens eine vom Wellenende ausgehende Kerbe vorgesehen. Die Kerbe kann ausgehend vom Wellenende sowohl gerade in axialer Richtung verlaufen als auch spiralförmig auf dem Umfang des betreffenden Wellenbereichs. Dies hat den Vorteil, dass plastische Masse in den Übergangsbereich zwischen der Motorwelle und der Getriebewelle in einfacher Weise eingebracht werden kann. Andererseits wird auch durch die im Bereich der einen oder mehreren Kerben eingebrachte plastische Masse nach deren Aushärtung die Kopplung zwischen der Motorwelle und der Getriebewelle weiter verbessert.

Weitere vorteilhafte Eigenschaften der Erfindung ergeben sich aus deren beispielhafter Erläuterung anhand der Figuren. Es zeigt:
- Figur 1: eine Längsschnittdarstellung eines Teils eines Kraftfahrzeug-Stellantriebs gemäß der Erfindung,
- Figur 2: eine schematische Ansicht einer ersten alternativen Ausführungsform eines Kraftfahrzeug-Stellantriebs gemäß der Erfindung und
- Figur 3: eine schematische Ansicht einer zweiten alternativen Ausführungsform eines Kraftfahrzeug-Stellantriebs gemäß der Erfindung.

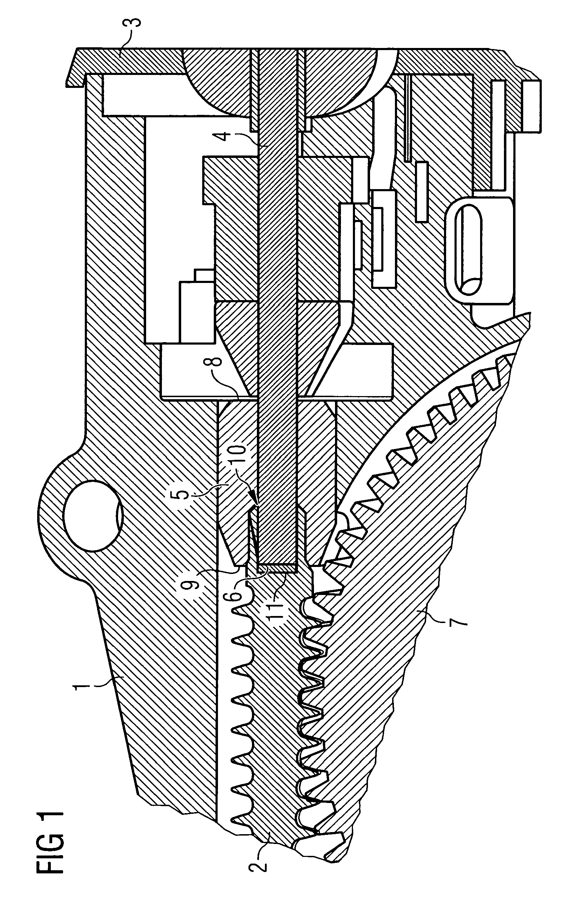

In der Figur 1 ist eine Längsschnittdarstellung eines Teils eines Kraftfahrzeug-Stellantriebs gemäß der Erfindung gezeigt. Der dargestellte Stellantrieb weist ein Getriebegehäuse 1 und ein an dieses angeflanschtes Motorgehäuse 3 auf. Im Getriebegehäuse 1 sind unter anderem ein Schneckenrad 7 und eine als Schneckenwelle realisierte Getriebewelle 2 vorgesehen. Im Motorgehäuse 3 ist eine Motorwelle 4 vorgesehen, die in Axialrichtung in das Getriebegehäuse 1 hineinragt.

Das linksseitige Ende der Motorwelle 4 und das rechtsseitige Ende der Getriebewelle 2 sind in einem gemeinsamen Lager 5 gelagert. Dieses ist im Getriebegehäuse 1 positioniert.

Der Endbereich der Getriebewelle 2 weist eine zylinderförmige Öffnung 10 auf, in welche der Endbereich der Motorwelle 4 in Axialrichtung hineinragt. Zwischen dem Endbereich der Motorwelle 4 und dem Boden 11 der zylinderförmigen Öffnung 10 der Getriebewelle 2 ist ein Axialspielausgleichselement 6 vorgesehen, welches eventuelle Fertigungsungenauigkeiten von Getriebewelle 2 und/oder Motorwelle 4 ausgleicht.

Bei diesem Axialspielausgleichselement 6 handelt es sich um eine nachträglich härtende plastische Masse, die beim Zusammenbau des Stellantriebes in die zylinderförmige Öffnung 10 der Getriebewelle 2 eingebracht wird und nach dem Aushärten nicht nur das fertigungsbedingte Axialspiel ausgleicht, sondern auch die Kopplung zwischen der Motorwelle 4 und der Getriebewelle 2 verstärkt. Dadurch ist die Weitergabe des Drehmoments von der Motorwelle 4 an die Getriebewelle 2 verbessert. Weiterhin wird dadurch auch ein Auftreten von Umschaltgeräuschen vermieden oder zumindest stark reduziert.

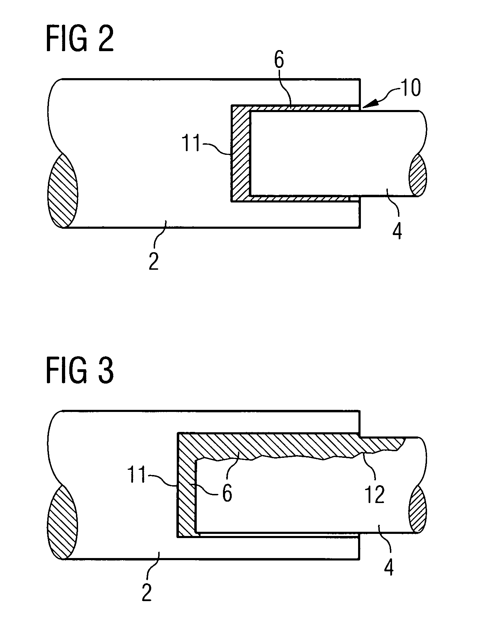

Die Figur 2 zeigt eine schematische Ansicht einer ersten alternativen Ausführungsform eines Kraftfahrzeug-Stellantriebes gemäß der Erfindung.

Gemäß dieser alternativen Ausführungsform ist die im Endbereich der Getriebewelle 2 vorgesehene Öffnung 10 in Radialrichtung größer als der Durchmesser der Motorwelle 4. Dies hat den Vorteil, dass durch den dadurch gebildeten Spalt plastische Masse in den Übergangsbereich zwischen der Motorwelle 4 und der Getriebewelle 2 in einfacher Weise eingebracht werden kann. Dies erlaubt es, die plastische Masse erst nach dem Einsetzen der Motorwelle in die Öffnung 10 der Getriebewelle einzubringen. Eine weitere Möglichkeit besteht darin, dass vor dem Montagevorgang eingebrachte überschüssige plastische Masse beim Zusammenführen von Motorwelle 4 und Getriebewelle 2 bei der Montage in den Übergangsbereich hinein verdrängt werden können. Weiterhin hat dies den Vorteil, dass die Menge der plastischen Masse an die Größe des im Einzelfall jeweils vorhandenen Axialspiels angepasst werden kann. Ist das Axialspiel gering, dann wird nur vergleichsweise wenig plastische Masse eingebracht. Ist das Axialspiel hingegen groß, dann wird vergleichsweise viel plastische Masse eingebracht. Ein weiterer Vorteil der in der Figur 2 dargestellten Ausführungsform besteht darin, dass auch der seitliche Bereich zwischen dem Außenumfang der Motorwelle 4 und dem Innendurchmesser der Öffnung 10 mit plastischer Masse 6 gefüllt wird. Ist diese plastische Masse ausgehärtet, dann ist die Kopplung zwischen Motorwelle 4 und Getriebewelle 2 und damit auch die Übertragung des Drehmoments von der Motorwelle auf die Getriebewelle im Vergleich zu der in der Figur 1 gezeigten Ausführungsform verbessert.

Die Figur 3 zeigt eine schematische Ansicht einer zweiten alternativen Ausführungsform eines Kraftfahrzeug-Stellantriebs gemäß der Erfindung. Gemäß dieser zweiten alternativen Ausführungsform ist der Endbereich 4 der Motorwelle mit einer vom Wellenende ausgehenden, in axialer Ausrichtung angeordneten Kerbe 12 versehen. Durch diese Kerbe entsteht ein Spalt, durch welchen plastische Masse in den Übergangsbereich zwischen der Motorwelle 4 und der Getriebewelle 2 in einfacher Weise eingebracht werden kann. Dies erlaubt es, die plastische Masse erst nach dem Einsetzen der Motorwelle in die Öffnung 10 der Getriebewelle einzubringen oder auch zuvor eingebrachte überschüssige plastische Masse beim Montagevorgang in die Kerbe hinein zu verdrängen. Weiterhin hat dies den Vorteil, dass die Menge der plastischen Masse an die Größe des im Einzelfall jeweils vorhandenen Axialspiels angepasst werden kann. Ist das Axialspiel gering, dann wird nur vergleichsweise wenig plastische Masse eingebracht. Ist das Axialspiel hingegen groß, dann wird vergleichsweise viel plastische Masse eingebracht. Ein weiterer Vorteil der in der Figur 3 dargestellten Ausführungsform besteht darin, dass auch ein Teil des seitlichen Bereichs zwischen dem Außenumfang der Motorwelle 4 und dem Innendurchmesser der Öffnung 10 mit plastischer Masse 6 gefüllt wird. Ist diese plastische Masse ausgehärtet, dann ist die Kopplung zwischen der Motorwelle 4 und der Getriebewelle 2 und damit auch die Übertragung des Drehmoments im Vergleich zu der in der Figur 1 gezeigten Ausführungsform verbessert.

Zur weiteren Steigerung dieses Effektes können auch mehrere über den Umfang der Motorwelle verteilt angeordnete Kerben vorgesehen werden.

## Patentansprüche

1. Kraftfahrzeug-Stellantrieb mit einer eine Getriebewelle aufweisenden Getriebeeinheit und einer eine Motorwelle aufweisenden Motoreinheit, wobei die Getriebewelle und die Motorwelle in Drehmitnahmeverbindung stehen und in Axialrichtung in einer Flucht verlaufen und mit einem Axialspielausgleichselement zwischen der Getriebewelle und der Motorwelle, **dadurch gekennzeichnet, dass** das Axialspielausgleichselement (6) eine nachträglich härtende plastische Masse ist.

2. Kraftfahrzeug-Stellantrieb nach Anspruch 1, **dadurch gekennzeichnet, dass** die Getriebewelle (2) in ihrem der Motorwelle (4) zugewandten Endbereich mit einer Öffnung (10) versehen ist, in welche ein Endbereich der Motorwelle (4) hineinragt.

3. Kraftfahrzeug-Stellantrieb nach Anspruch 2, **dadurch gekennzeichnet, dass** die im Endbereich der Getriebewelle (2) vorgesehene Öffnung (10) in Radialrichtung größer ist als der Durchmesser der Motorwelle (4).

4. Kraftfahrzeug-Stellantrieb nach Anspruch 2, **dadurch gekennzeichnet, dass** die Motorwelle (4) in ihrem in die Getriebewelle (2) hineinragenden Bereich an ihrem Außenumfang mit mindestens einer Kerbe (12) versehen ist.
